# FASCICULE DE BREVET EUROPEEN

(11) **EP 0 890 054 B1**
(45) Date de publication et mention de la délivrance du brevet: **24.07.2002**
(21) Numéro de dépôt: 97948956.4
(22) Date de dépôt: 28.11.1997
(51) Int. Cl.: F16L 37/32, F16L 37/34

(54) **RACCORD RAPIDE ETANCHE PERFECTIONNE**
ABGEDICHTETE SCHNELL-KUPPLUNG
IMPROVED TIGHT RAPID ACTION PIPE COUPLING

(30) Priorité: 29.11.1996 FR 9614654
(43) Date de publication de la demande: 13.01.1999
(73) Titulaire: VALEO, 75017 Paris (FR)
(72) Inventeur: TOBIASZ, André, F-93800 Epinay-sur-Seine (FR)
(74) Mandataire: Gamonal, Didier
(86) Numéro de dépôt international: FR9702154
(87) Numéro de publication internationale: WO9823891

(56) Documents cités:
- EP-A- 0 259 236
- EP-A- 0 742 403
- GB-A- 912 508
- GB-A- 2 087 019

## Description

La présente invention concerne un raccord hydraulique étanche rapide.

L'invention concerne plus particulièrement un raccord hydraulique étanche pour l'interconnexion de deux tronçons d'une conduite dans laquelle circule un fluide, appartenant notamment à un circuit de commande hydraulique d'un embrayage de véhicule automobile, du type comportant une paire d'éléments complémentaires coaxiaux dont l'un comprend un corps tubulaire dont l'extrémité arrière est fermée par une pièce qui se prolonge axialement par une queue de raccordement et de fixation de l'un des tronçons de la conduite qui est traversée axialement par un perçage qui débouche dans une chambre délimitée radialement par le corps tubulaire et axialement vers l'avant par un obturateur normalement fermé pour rendre l'élément de raccord étanche lorsque les deux éléments ne sont pas accouplés entre eux, du type dans lequel l'obturateur de cet élément du raccord comporte un capuchon mobile monté coulissant axialement à l'intérieur du corps tubulaire, entre une position avant d'obturation vers laquelle il est rappelé élastiquement et dans laquelle il coopère de manière étanche avec la partie d'extrémité avant du corps tubulaire et une position arrière d'ouverture vers laquelle il est déplacé, par l'extrémité libre avant de l'autre élément du raccord, lorsque les deux éléments sont accouplés, du type dans lequel le capuchon mobile, de forme générale de révolution, comporte un tronçon arrière de guidage de son coulissement à l'intérieur du corps tubulaire dont la paroi périphérique comporte une série d'ailettes qui s'étendent radialement vers l'extérieur et qui délimitent circonférentiellement entre elles une série de passages axiaux qui, lorsque le capuchon mobile est dans sa position arrière d'ouverture, établissent une communication entre les deux éléments du raccord, du type dans lequel le capuchon mobile est rappelé élastiquement vers sa position avant d'obturation par un ressort à boudin qui est sensiblement adjacent à la paroi cylindrique interne du corps tubulaire et qui est monté comprimé axialement entre la pièce de fermeture et de raccordement et le capuchon mobile, l'extrémité avant du ressort prenant appui axialement vers l'avant contre une surface d'appui formée par les faces transversales d'extrémité arrière des ailettes, et les passages axiaux débouchant axialement vers l'arrière à l'intérieur du ressort à boudin.

Un tel type de raccord, aussi appelé raccord rapide, est décrit et représenté par exemple dans le document GB-A-2.087.019.

Dans ce document, le raccord rapide comporte un corps tubulaire à l'extrémité avant duquel est vissé un premier manchon de raccordement. Un deuxième manchon, qui est monté coaxialement à l'intérieur du premier manchon, reçoit intérieurement un capuchon mobile axialement.

Le capuchon mobile est rappelé élastiquement par un ressort à boudin vers sa position avant d'obturation dans laquelle son extrémité avant sensiblement tronconique coopère de manière étanche avec une surface tronconique interne, à l'avant du deuxième manchon.

Le capuchon mobile comporte dans son tronçon arrière des ailettes radiales délimitant une surface transversale arrière sur laquelle vient s'appuyer axialement le ressort.

Le dispositif d'obturation du corps tubulaire par le capuchon mobile décrit dans ce document est complexe. Il nécessite un nombre important de pièces et des pièces de formes compliquées. En particulier il nécessite un manchon intermédiaire muni d'une ouverture de forme tronconique et un capuchon mobile muni d'une partie avant tronconique.

De plus, la position avant d'obturation du capuchon mobile n'est pas déterminée précisément, puisqu'elle dépend du frottement entre les deux éléments tronconiques, et elle peut donc évoluer au cours du temps, notamment en raison de l'usure des pièces ou du vieillissement des matériaux, ce qui peut provoquer des problèmes d'étanchéité.

D'autres raccords hydrauliques étanches sont décrits et représentés dans les documents EP-A-259.236 et FR-A-2.632.218.

Le document européen décrit et représente un raccord double pour la jonction amovible de canalisations jumelées. Dans ce document, un joint fixe annulaire d'étanchéité est porté par un premier corps tubulaire et il intervient entre la surface cylindrique interne de la partie d'extrémité avant de ce premier corps tubulaire et l'extrémité libre d'un deuxième corps tubulaire concentrique.

Le deuxième corps tubulaire comporte un capuchon mobile qui vient en appui axial contre le joint fixe annulaire dans sa position avant d'obturation, en vue d'assurer l'étanchéité du raccord.

Ce dispositif d'obturation n'est pas satisfaisant car, lors d'un stockage du raccord en position découplée, le joint est écrasé axialement par le capuchon mobile, ce qui peut provoquer un vieillissement prématuré du joint, ainsi qu'une mauvaise étanchéité.

Le document français décrit et représente deux corps tubulaires concentriques qui sont raccordés par emboîtement radial d'une nervure interne d'un premier corps tubulaire dans la gorge externe d'un deuxième corps tubulaire, avec interposition d'un joint torique.

Ce document ne décrit pas des moyens d'étanchéité pour un raccord rapide comportant un capuchon mobile d'obturation.

La présente invention vise à remédier à ces inconvénients en proposant un raccord hydraulique rapide muni d'un dispositif d'obturation par un capuchon mobile qui procure une étanchéité parfaite et durable.

Dans ce but, l'invention propose un raccord du type mentionné précédemment, caractérisé en ce que les ailettes sont délimitées axialement vers l'avant par des faces transversales d'extrémité avant qui coopèrent avec un épaulement radial interne solidaire du corps tubulaire pour déterminer la position avant d'obturation du capuchon mobile, et en ce qu'un joint fixe annulaire d'étanchéité, qui est monté dans une gorge radiale interne agencée à l'extrémité avant du corps tubulaire, coopère radialement de manière étanche avec une surface cylindrique de portée du capuchon mobile, lorsque ce dernier est dans sa position avant d'obturation.

Pour faciliter le moulage du capuchon à partir d'un moule en deux demi-coquilles, les ailettes s'étendent radialement à partir d'un manchon central du capuchon mobile.

Des caractéristiques complémentaires de l'invention font l'objet de revendications dépendantes.

D'autres caractéristiques et avantages de l'invention apparaîtront à la lecture de la description détaillée qui suit pour la compréhension de laquelle on se reportera aux dessins annexés dans lesquels :
- la figure 1 est une vue en section axiale d'un exemple de réalisation d'un raccord hydraulique étanche réalisé conformément aux enseignements de l'invention et sur laquelle les deux éléments mâle et femelle du raccord sont illustrés en début de phase d'accouplement par introduction axiale de l'élément mâle dans l'élément femelle ;
- la figure 2 est une vue de détail de la partie arrière de l'élément femelle du raccord qui illustre le mode de fixation de la tige centrale creuse dans la pièce de raccordement et de fixation ;
- la figure 3 est une vue similaire à celle de la figure 1 sur laquelle les deux éléments du raccord sont illustrés dans la position axiale relative dans laquelle les capuchons des obturateurs des deux éléments viennent d'entrer en contact mutuel; et
- la figure 4 est une vue similaire à celle des figures 1 et 3 dans laquelle les deux éléments sont en position accouplée et verrouillée.

Le raccord rapide hydraulique étanche 10 illustré sur les figures comporte un premier élément femelle 11 et un second élément mâle 12.

Ce raccord 10 est conformé par l'interconnexion de deux tronçons 31,32 d'une conduite dans laquelle circule un fluide appartenant ici à un circuit de commande hydraulique d'un embrayage de véhicule automobile.

Les deux éléments femelle 11 et mâle 12 sont complémentaires et chacun comprend un corps de forme générale tubulaire cylindrique 13, 14 constitué par un fourreau métallique dont l'extrémité arrière 15, 16 est fermée par une pièce de fermeture et de raccordement 17, 18. Chacune des pièces de raccordement 17, 18 comporte un tronçon avant massif 19, 20 qui est reçu dans la partie d'extrémité arrière 15, 16 du fourreau tubulaire 13, 14 et qui comporte à sa périphérie externe une gorge radiale interne 21, 22 qui reçoit un joint torique d'étanchéité fixe 23, 24 assurant l'étanchéité de la partie arrière du corps tubulaire 13, 14 par rapport à la pièce de fermeture et de raccordement 17, 18.

La fixation axiale étanche entre le corps tubulaire 13, 14 et le tronçon avant 19, 20 est assurée par un sertissage radial interne 25, 26 de la partie arrière 15, 16 qui est effectué au droit de la gorge 21, 22 qui reçoit le joint d'étanchéité fixe 23, 24. Les gorges 21,22 ont ainsi une double fonction.

Le tronçon avant massif 19, 20 de fixation de la pièce 17, 18 se prolonge axialement vers l'arrière par une queue de raccordement 27, 28 qui est réalisée venue de matière en une seule pièce et qui, selon une conception connue dite "en sapin", comporte par exemple des parties en relief de forme tronconique 29, 30 agencées axialement successivement et qui servent au raccordement et à la retenue d'un tronçon 31, 32 d'une conduite souple, la fixation étant par exemple assurée au moyen d'un collier de serrage 33, 34.

Chaque élément 11, 12 du raccord hydraulique se présente ainsi sous la forme d'un élément autonome qui, avec sa pièce 17, 18 de fixation et de raccordement hydraulique, peut être fixé à l'extrémité d'un tronçon de conduite souple 31, 32 indépendamment de la fabrication de cette conduite et par des moyens classiques très simples tels que des colliers de serrage 33, 34.

L'invention n'est pas limitée à ce type de moyens de fixation des tronçons de conduite 31, 32 sur les queues 27, 28 des pièces 17, 18 de fixation et de raccordement qui, on le notera, sont de conception identique pour limiter le nombre de composants différents d'un raccord hydraulique 10.

Chacune de ces pièces 17, 18 est bien entendu traversée coaxialement en son centre par un perçage axial étagé 35, 36 qui débouche de part en part et qui est constitué par un tronçon axial arrière 37, 38 et par un tronçon axial avant 39, 40 de plus grand diamètre qui débouche dans la face annulaire d'extrémité axiale avant 41, 42 du tronçon avant 19, 20 de la pièce 17, 18.

Cette face annulaire avant 41, 42 délimite axialement vers l'avant une chambre ou cavité interne 43, 44 de l'élément 11, 12 qui est délimitée radialement vers l'extérieur par la surface cylindrique interne 45, 46 du fourreau tubulaire 13, 14.

Chacune des faces annulaires 41, 42 constitue une surface annulaire arrière d'appui pour l'extrémité arrière 47, 48, c'est-à-dire pour la dernière spire, d'un ressort à boudin 49, 50 qui est agencé axialement à l'intérieur de la chambre 43, 44.

Chaque ressort 49, 50 est un ressort de rappel vers sa position de fermeture d'un obturateur, normalement fermé, 51, 52 qui délimite axialement vers l'avant la chambre 43, 44 lorsque les deux éléments 11 et 12 du raccord 10 ne sont pas accouplés, de manière à assurer une obturation étanche de chaque élément femelle 11 et mâle 12 du raccord hydraulique 10.

Chaque obturateur 51, 52 en matière moulable, ici en matière plastique moulable, comporte un capuchon 53, 54 qui coopère avec un joint d'étanchéité 55, 56.

Dans l'exemple de réalisation illustré sur les figures, l'élément femelle 13 est obturé par l'obturateur 51 qui est un obturateur du type à capuchon fixe 53 et à joint d'étanchéité mobile 55.

Le capuchon fixe 53 est fixé axialement à l'extrémité libre avant 57 d'une tige centrale de support 59 qui est coaxiale à l'élément 11.

La tige centrale 59, ici en matière plastique, est une tige creuse qui comporte un perçage axial interne 61 qui la traverse de part en part.

La partie d'extrémité avant 57 de la tige centrale creuse 59 comporte un alésage avant de diamètre réduit 63 qui constitue un logement qui reçoit le pied central arrière 65, de diamètre complémentaire, du capuchon fixe 53 qui est réalisé venu de matière par moulage, par exemple en matière plastique, avec le corps 67 du capuchon fixe 53 en forme de plateau qui s'étend radialement vers l'extérieur à partir du pied central 65 et qui est délimité vers l'arrière par une surface convexe 69 constituant un siège fixe d'étanchéité avec lequel coopère une surface concave complémentaire 71, orientée axialement vers l'avant, du joint mobile d'étanchéité 55.

La forme des surfaces 69,71 favorise le passage du fluide de commande lorsque les deux éléments 11,12 sont accouplés.

Le corps avant 67 du capuchon fixe 53 est délimité axialement vers l'avant par une face transversale d'extrémité avant 73 de forme creuse tronconique qui constitue une portée de centrage dont la fonction sera expliquée par la suite.

Dans l'exemple illustré sur les figures, le pied central 65 est fixé axialement à la partie d'extrémité avant 57 de la tige centrale creuse 59 par emboîtement élastique, c'est-à-dire qu'un bourrelet 75 de l'alésage 63 est reçu dans une gorge complémentaire formée radialement vers l'intérieur dans la surface cylindrique externe du pied central 65, ce dernier étant évidé intérieurement pour faciliter le moulage et l'assemblage par emboîtement élastique.

Bien entendu on peut inverser les structures, le bourrelet étant porté par le pied 65, la gorge complémentaire étant réalisée dans l'alésage 63.

La tige centrale creuse 59 est fixée à la pièce de raccordement et de fixation 17 par sa partie d'extrémité axiale arrière 77 qui est reçue dans le tronçon avant de plus grand diamètre 39 du perçage axial interne 35 de la pièce 17.

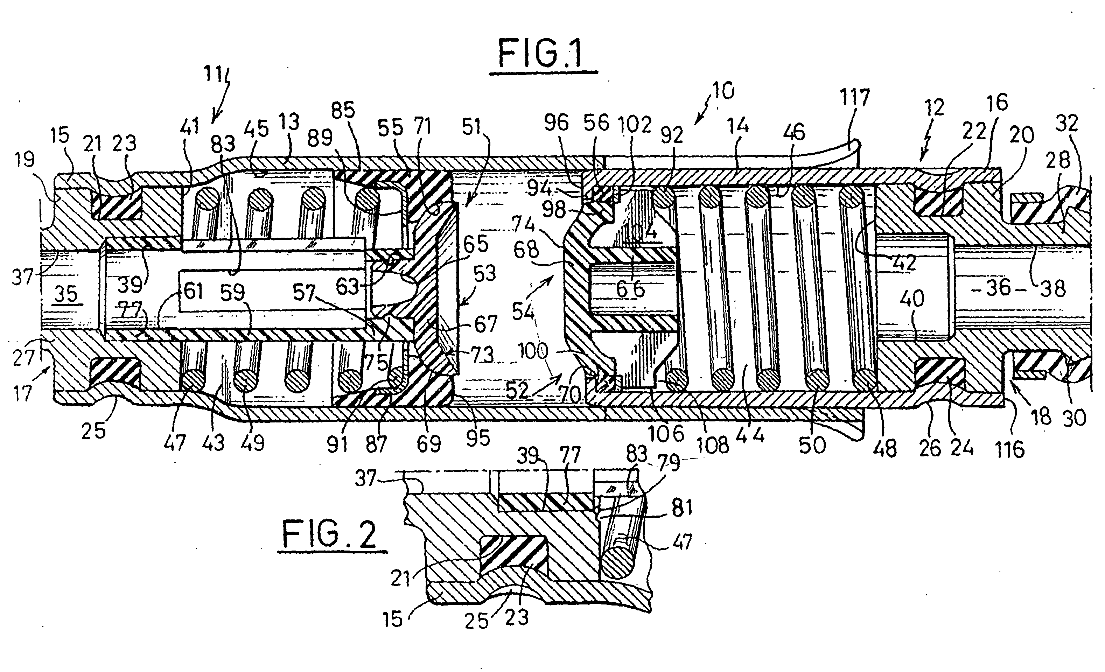

La tige 59 est ainsi centrée coaxialement par rapport à la pièce 17 et au fourreau 13 et elle est retenue axialement par rapport à la pièce 17 par une opération de sertissage qui permet, à partir de la face avant 41 de la pièce 17, de réaliser, comme on peut le voir en détail à la figure 2, une série de becs 79 de retenue axiale qui sont réalisés par des opérations de sertissage 81 et qui s'étendent en regard de l'extrémité axiale arrière 77, qui délimite axialement vers l'arrière une fente 83 qui est formée dans le corps tubulaire de la tige centrale creuse 59.

Dans le mode de réalisation illustré sur les figures, la tige 59 comporte trois fentes 83 d'orientation axiale qui s'étendent depuis la partie arrière 77 jusqu'à la partie avant 57 de la tige centrale 59.

Les fentes 83 sont largement dimensionnées et elles offrent ainsi une section importante de passage au fluide entre la chambre 43 et le perçage axial 35.

Le joint mobile d'étanchéité 55 est une coupelle d'étançhéité constituée par un corps souple en matériau élastomère de forme générale annulaire dont la forme cylindrique 85 est complémentaire de la paroi cylindrique interne 45 du fourreau tubulaire 13, le corps étant renforcé par une armature 87 qui présente une section en forme de L.

L'armature 87 est ici métallique, mais elle peut aussi être réalisée en matière plastique rigide, la liaison entre le corps du joint et son armature 87 étant réalisée par collage, par adhérisation ou par surmoulage, pour réduction du nombre des pièces à stocker.

Outre sa fonction de renfort du joint 55, l'armature 87 délimite, par sa portion 89 d'orientation radiale, une surface annulaire avant d'appui pour la spire d'extrémité axiale avant 91 du ressort de rappel 49.

En position désaccouplée des éléments 11 et 12 du raccord, le ressort de rappel 49 sollicite le joint mobile d'étanchéité 55 en contact étanche avec le siège 69 du capuchon fixe 53 de manière à assurer une obturation étanche de l'élément femelle 11 du raccord 10.

L'obturateur 52 de l'élément mâle 12 du raccord étanche 10 est un obturateur à capuchon mobile 54 et à joint d'étanchéité 56 fixe par rapport au fourreau tubulaire 14 de cet élément 12.

Le fourreau tubulaire 14 se termine à son extrémité axiale libre avant par un collet radial interne 94 dont la face annulaire d'extrémité avant 96 est susceptible de coopérer avec la-face annulaire d'extrémité avant 95 du corps du joint mobile d'étanchéité 55 de l'élément femelle 13 du raccord étanche 10.

Le collet radial interne 94 reçoit en coulissement avec un léger jeu radial une portion cylindrique 98 du corps avant 68 du capuchon mobile 54 qui délimite un siège cylindrique coaxial 70 d'étanchéité de l'obturateur 52 avec lequel coopère de manière étanche le joint fixe d'étanchéité 56.

Le joint 56 est reçu dans un logement en forme de gorge délimitée axialement vers l'avant dans la face annulaire arrière 100 du collet 94 et vers l'arrière par la face annulaire avant d'une rondelle 102 rapportée à l'intérieur de la partie d'extrémité libre avant du fourreau tubulaire 14.

La conception faisant appel à une rondelle 102 est particulièrement avantageuse en ce qu'elle permet d'utiliser un fourreau tubulaire 14 d'épaisseur constante. A titre de variante, il est possible de réaliser la gorge qui reçoit le joint d'étanchéité 56 sous la forme d'une gorge radiale interne d'une partie avant plus massive du corps tubulaire 14.

Le capuchon mobile 54 est ici une pièce moulée en matière plastique, axialement à partir de deux demi-coquilles, qui comporte un pied central en forme de manchon 66 évidé centralement qui se prolonge axialement vers l'avant par le corps 68 en forme de plateau dont la face d'extrémité axiale avant 74 est bombée et de forme tronconique complémentaire de la face concave 73 d'extrémité avant du capuchon fixe 53, de manière à assurer un centrage mutuel des obturateurs 51 et 52 lors de l'accouplement des deux éléments 11 et 12 du raccord.

A partir du pied central en forme de manchon tubulaire 66 favorisant le moulage, le capuchon mobile 54 comporte une série d'ailettes 104 en forme de voiles radiaux, favorisant le passage du fluide, qui s'étendent radialement vers l'extérieur et qui sont délimitées extérieurement radialement par des bords 106 d'orientation axiale.

Les ailettes 104 constituent un tronçon arrière de guidage du capuchon mobile 54 en coulissement à l'intérieur de la surface cylindrique interne 46 du fourreau tubulaire 14, les bords 106 des ailettes 104 étant reçus avec jeu radial dans la surface 46 de manière à permettre un mouvement de pivotement en rotule du capuchon mobile 54 à l'intérieur du fourreau tubulaire 14 lors de l'accouplement pour faciliter le centrage mutuel des deux obturateurs 51 et 52 par coopération de formes.

Les ailettes 104 sont délimitées axialement vers l'arrière par des bords transversaux d'extrémité axiale arrière 108 qui comportent un décrochement constituant une surface annulaire avant d'appui pour la spire d'extrémité avant 92 du ressort de rappel à boudin 50 qui sollicite axialement en permanence le capuchon mobile 54 vers sa position de repos dans laquelle il obture de manière étanche l'élément 12 du raccord 10, lorsque les deux éléments ne sont pas accouplés.

La position de repos du capuchon fixe 54 est délimité par la venue en butée des bords transversaux d'extrémité axiale avant 110 des ailettes 104 qui viennent en butée contre la face annulaire arrière de la rondelle 102.

Le diamètre du ressort cylindrique à boudin 50 est sensiblement égal au diamètre interne du fourreau tubulaire 14 de manière que ses spires ne s'étendent pas sur le trajet du liquide, comme cela sera expliqué par la suite, qui peut passer directement entre les ailettes 104 à l'intérieur du ressort 50 en direction du perçage 36 de la pièce 18.

On notera que le nombre de composants de chacun des éléments 11, 12 du raccord 10 est particulièrement réduit et que leur assemblage est très simple.

Dans le cas de l'élément femelle 11, après avoir serti le corps tubulaire 13 sur la pièce de raccordement 17 dans laquelle a préalablement été sertie la tige centrale 59, il suffit d'introduire axialement le ressort de rappel 49 puis le joint mobile d'étanchéité 55 et enfin le capuchon fixe 53, l'assemblage des composants étant obtenus par emboîtement élastique du capuchon à l'intérieur de l'extrémité avant 57 de la tige centrale 59, tous les composants occupant alors, de manière indémontable la position illustrée à la figure 1.

De même, dans le cas de l'élément mâle 12, l'assemblage commence par la mise en place du joint fixe d'étanchéité 56, la rondelle 102, puis du capuchon mobile 54 qui est introduit axialement de l'arrière vers l'avant, puis du ressort de rappel 50 et enfin du tronçon massif avant 20 de la pièce 18 de raccordement et de fixation, l'assemblage final des composants étant obtenu par l'opération de sertissage 26 qui aboutit à la liaison définitive entre le fourreau 14 et la pièce de fixation 18, l'ensemble des composants étant alors assemblé de manière indémontable.

Selon une conception connue, les deux éléments 11 et 12 comportent des moyens complémentaires du type à crans et épaulement 116 et 117 qui permettent de verrouiller les deux éléments en position axiale d'accouplement, le fourreau 13 portant à son extrémité avant des pattes inclinées élastiques venant en prise avec la face annulaire arrière du tronçon 20 de la pièce 18.

L'accouplement et le raccordement hydraulique des deux éléments 11 et 12 du raccord 10 s'effectuent de la manière suivante.

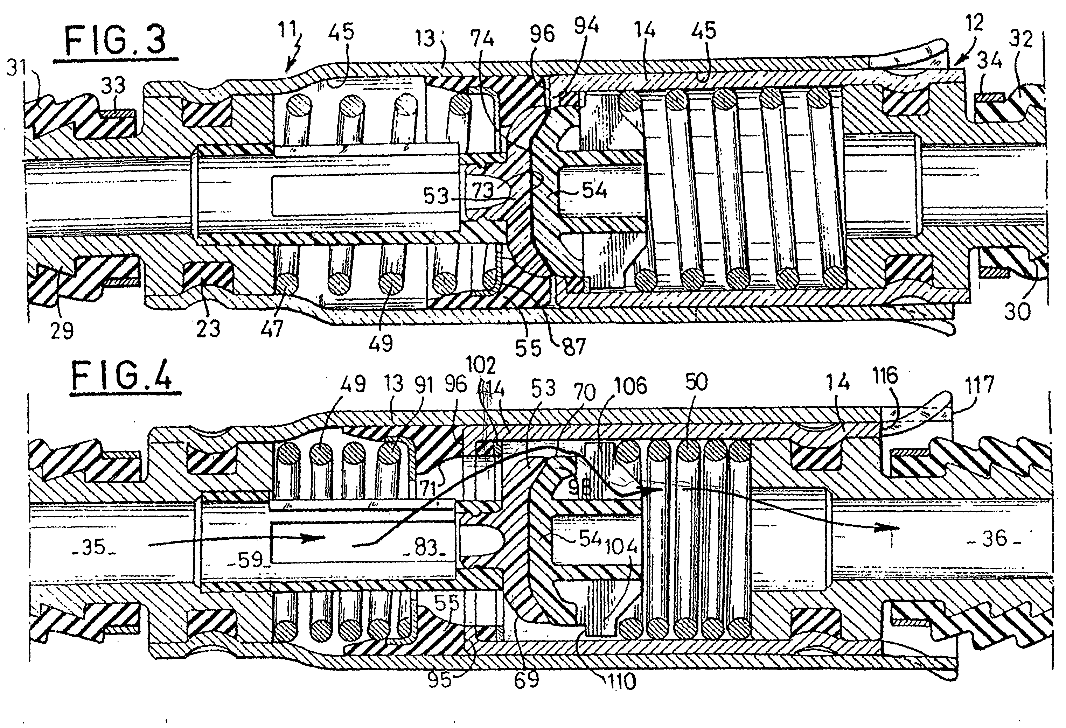

En partant de la position intermédiaire illustrée à la figure 1, l'accouplement se poursuit par rapprochement axial mutuel des deux éléments 11 et 12 jusqu'à une première position illustrée à la figure 3 dans laquelle les capuchons fixe 53 et mobile 54 viennent en contact mutuel par leurs surfaces avant complémentaires 73 et 74.

Les faces annulaires d'extrémité avant 95 et 96 du joint mobile d'étanchéité 55 et du collet 94 ne sont pas encore entrées en contact et les deux éléments 11 et 12 sont toujours obturés de manière étanche par leurs obturateurs respectifs 51, 52, aucune communication de fluide n'existant entre les deux éléments du raccord.

Le raccordement se poursuit par introduction axiale de l'élément mâle 12 à l'intérieur de l'élément femelle 11 jusqu'à la position axiale verrouillée de raccordement étanche illustrée à la figure 4 dans laquelle les deux éléments sont verrouillés.

Au cours de cette introduction, la face annulaire d'extrémité avant 96 du collet 94 du fourreau tubulaire 14 a sollicité axialement la face annulaire d'extrémité avant 95 du joint mobile d'étanchéité 55 provoquant un recul de ce dernier à l'intérieur du fourreau tubulaire 13, c'est-à-dire axialement de la droite vers la gauche en considérant les figures 3 et 4, et ceci à l'encontre de l'effort de rappel qui lui est appliqué par le ressort 49.

Au cours de ce même mouvement, le capuchon fixe 53 a provoqué le recul axial du capuchon mobile 54 vers l'intérieur de l'élément mâle 12, à l'encontre de l'effort de rappel qui lui est appliqué par le ressort 50.

Dans la position illustrée à la figure 4, on voit donc que les sièges d'étanchéité 69 et 70 ne coopèrent plus avec les portions complémentaires des joints 55 et 56.

Le fluide, qui pénètre par exemple dans le raccord étanche 10 de la gauche vers la droite, peut ainsi circuler librement à l'intérieur de la tige centrale creuse 59 puis passer à travers les fentes 83 à l'intérieur du joint 55 et ceci sans traverser aucune spire du ressort 49 car, en position d'accouplement, le joint 55 et la spire avant 91 sont situés axialement en arrière des extrémités avant des fentes 83 facilitant ainsi la circulation du fluide qui, au-delà du joint d'étanchéité 55.

Le fluide pénètre à l'intérieur de l'élément mâle 12 entre le joint d'étanchéité 56 et le siège 69 puis, au-delà du siège 70, entre les ailettes 104 directement à l'intérieur du ressort à boudin 50 sans traverser les spires de ce dernier puis à l'intérieur du perçage axial 36 de la pièce 18 de raccordement et de fixation.

Dans le cas où le raccord étanche 10 est utilisé pour des fortes pressions, l'élément mâle 12 est de préférence relié à l'émetteur du circuit hydraulique, la circulation du fluide s'effectuant alors dans le sens inverse de celui indiqué sur la figure 4.

Cette solution est en effet préférable dans la mesure où, en position non accouplée, c'est-à-dire déconnectée du raccord 10, l'obturateur 52 à capuchon mobile 54 est susceptible de supporter des pressions plus importantes.

On appréciera que de l'air ne risque pas de pénétrer dans la conduite lors du passage de la position de la figure 3, à celui de la figure 4.

En variante les moyens de fixation des tronçons de conduite sur les queues 27,28 peuvent faire intervenir une liaison du type vis-écrou pour l'une au moins des pièces 17,18 ; toutes les combinaisons étant possibles. La tige 59 peut être monobloc avec le capuchon 53 et se fixer par collage, encliquetage ou par emmanchement à force sur la pièce 17 par sa partie arrière 77. Le verrouillage des deux éléments 11,13 peut être réalisés à l'aide d'une épingle élastique et de gorges comme dans le document FR-A-1 080 178.

La présence de la pièce 19 n'est pas nécessaire, le fourreau 13 pouvant être fixé par serrage sur le tronçon 31 semi rigide comme dans le document FR-A-2 688 291 ou souple.

Le tronçon 31 peut être, en variante, souple. Le fourreau 14 peut venir serrer le tronçon 32 et est donc prolongé vers l'arrière. Dans ce cas; les fourreaux 13,14 présentent des déformations lovales pour. serrage des tronçons souples.

On peut inverser les structures, par exemple le joint 56 peut être porté par l'obturateur 52 mobile et son siège par le fourreau 14 alors épaissi à l'avant.

## Revendications

1. Raccord hydraulique étanche (10) pour l'interconnexion de deux tronçons (31, 32) d'une conduite dans laquelle circule un fluide, appartenant notamment à un circuit de commande hydraulique d'un embrayage de véhicule automobile, du type comportant une paire d'éléments complémentaires (11, 12) coaxiaux dont l'un (12) comprend un corps tubulaire (14) dont l'extrémité arrière est fermée par une pièce (18) qui se prolonge axialement par une queue de raccordement et de fixation (28) de l'un (32) des tronçons de la conduite qui est traversée axialement par un perçage (36) qui débouche dans une chambre (44) délimitée radialement par le corps tubulaire (14) et axialement vers l'avant par un obturateur (52) normalement fermé pour rendre l'élément (12) de raccord étanche lorsque les deux éléments (11, 12) ne sont pas accouplés entre eux, du type dans lequel l'obturateur (52) de cet élément du raccord comporte un capuchon mobile (54) monté coulissant axialement à l'intérieur (46) du corps tubulaire (14), entre une position avant d'obturation vers laquelle il est rappelé élastiquement (50) et dans laquelle il coopère de manière étanche avec la partie d'extrémité avant du corps tubulaire (14) et une position arrière d'ouverture vers laquelle il est déplacé, par l'extrémité libre avant (53) de l'autre élément (11) du raccord, lorsque les deux éléments sont accouplés, du type dans lequel le capuchon mobile (54), de forme générale de révolution, comporte un tronçon arrière (104) de guidage de son coulissement à l'intérieur du corps tubulaire (14) dont la paroi périphérique comporte une série d'ailettes (104) qui s'étendent radialement vers l'extérieur et qui délimitent circonférentiellement entre elles une série de passages axiaux qui, lorsque le capuchon mobile (54) est dans sa position arrière d'ouverture, établissent une communication entre les deux éléments (11, 12) du raccord, du type dans lequel le capuchon mobile (54) est rappelé élastiquement vers sa position avant d'obturation par un ressort à boudin (50) qui est sensiblement adjacent à la paroi cylindrique interne (46) du corps tubulaire (14) et qui est monté comprimé axialement entre la pièce de fermeture et de raccordement (18) et le capuchon mobile (54), l'extrémité avant du ressort (50) prenant appui axialement vers l'avant contre une surface d'appui formée par les faces transversales d'extrémité arrière (108) des ailettes (104), et les passages axiaux débouchant axialement vers l'arrière à l'intérieur du ressort à boudin (50),
**caractérisé en ce que** les ailettes (104) sont délimitées axialement vers l'avant par des faces transversales d'extrémité avant (110) qui coopèrent avec un épaulement radial interne (102) solidaire du corps tubulaire (14) pour déterminer la position avant d'obturation du capuchon mobile (54), et **en ce qu'**un joint fixe annulaire d'étanchéité (56), qui est monté dans une gorge radiale interne agencée à l'extrémité avant du corps tubulaire (14), coopère radialement de manière étanche avec une surface cylindrique (70) de portée du capuchon mobile (54), lorsque ce dernier est dans sa position avant d'obturation.

2. Raccord étanche selon la revendication précédente, **caractérisé en ce que** les ailettes (104) s'étendent radialement à partir d'un manchon central (66) du capuchon mobile.

3. Raccord étanche selon l'une quelconque des revendications précédentes, **caractérisé en ce que** le tronçon arrière (104) de guidage du capuchon mobile (54) est reçu avec jeu radial à l'intérieur (46) du corps tubulaire (14) de manière à permettre un mouvement de pivotement du capuchon mobile à l'intérieur du corps tubulaire pour permettre un centrage du capuchon mobile (54) par rapport à l'autre élément (11) du raccord lors de l'accouplement des deux éléments du raccord.

4. Raccord étanche selon l'une quelconque des revendications précédentes, **caractérisé en ce que** la surface de portée (70) du capuchon mobile se prolonge axialement vers l'avant par une surface bombée (74) pour faciliter le centrage du capuchon mobile (54) par rapport à l'autre élément (11, 53) du raccord lors de l'accouplement des deux éléments du raccord.

5. Raccord étanche selon la revendication précédente, **caractérisé en ce que** le corps tubulaire (14) se termine par un collet radial interne avant (94) dont la face annulaire avant (96) coopère avec un joint mobile d'étanchéité (55) du premier élément (11) du raccord (10) lors de l'accouplement des deux éléments.

6. Raccord étanche selon la revendication précédente, **caractérisé en ce que** la gorge qui reçoit le joint fixe (56) est délimitée axialement vers l'avant par la face annulaire arrière (100) dudit collet (94) et vers l'arrière par la face annulaire avant d'une rondelle (102) solidaire du corps tubulaire (14).

7. Raccord étanche selon l'une quelconque des revendications précédentes, **caractérisé en ce que** la pièce de fermeture et de raccordement (18) comporte un tronçon avant (20) de forme générale cylindrique qui est reçu, avec interposition d'un joint fixe d'étanchéité (24), à l'intérieur de la partie d'extrémité arrière (16) du corps tubulaire (14) du premier élément (12) du raccord.

8. Raccord étanche selon la revendication précédente, **caractérisé en ce que** le corps tubulaire (14) est un fourreau métallique dont la partie d'extrémité arrière (16) est fixée à la pièce de fermeture et de raccordement (18) par sertissage radial au droit d'une gorge radiale interne (22) formée dans ledit tronçon avant (20).

9. Raccord étanche selon la revendication précédente, **caractérisé en ce que** ladite gorge radiale interne (22) reçoit un joint torique fixe d'étanchéité (24) qui intervient entre le tronçon avant (20) de la pièce de fermeture et de raccordement (18) et la surface cylindrique interne (46) de la partie d'extrémité arrière (16) du fourreau (14).

10. Raccord étanche selon l'une quelconque des revendications précédentes, **caractérisé en ce que** les deux éléments complémentaires du raccord sont du type mâle (12) et femelle (11), et **en ce qu'**il est prévu des moyens débrayables de verrouillage des deux éléments en position accouplés qui les retiennent axialement l'un par rapport à l'autre.

## Patentansprüche

1. Dichtes hydraulisches Anschlußstück (10) zur Verbindung zweier Teilstücke (31, 32) einer Leitung, in der ein Fluid zirkuliert, die insbesondere zu einem hydraulischen Betätigungskreislauf einer Kraftfahrzeugkupplung gehört, umfassend ein Paar formschlüssiger koaxialer Elemente (11, 12), von denen eines (12) einen rohrförmigen Körper (14) umfaßt, dessen hinteres Ende durch ein Teil (18) verschlossen ist, das axial durch ein Endstück für den Anschluß und die Befestigung (28) eines (32) der Teilstücke der Leitung verlängert wird, durch das axial eine Bohrung (36) hindurchgeht, die in einer Kammer (44) mündet, die radial durch den rohrförmigen Körper (14) und axial nach vorn durch einen Verschluß (52) begrenzt ist, der normalerweise geschlossen ist, um das Element (12) des Anschlußstücks abzudichten, wenn die beiden Elemente (11, 12) nicht miteinander verbunden sind, wobei der Verschluß (52) dieses Elements des Anschlußstücks eine bewegliche Abdeckkappe (54) umfaßt, die axial verschiebbar im Innern (46) des rohrförmigen Körpers (14) zwischen einer vorderen Schließstellung, in der sie dicht mit dem vorderen Abschlußteil des rohrförmigen Körpers (14) zusammenwirkt, und einer hinteren Öffnungsposition gelagert ist, zu der sie durch das vordere freie Ende (53) des anderen Elements des Anschlußstücks verstellt wird, wenn die beiden Elemente verbunden sind, wobei die mit rotationssymmetrischer Gesamtform ausgeführte bewegliche Abdeckkappe (54) ein hinteres Teilstück (104) zur Führung ihrer Gleitverschiebung im Innern des rohrförmigen Körpers (14) umfaßt, dessen Umfangswand eine Reihe von Rippen (104) aufweist, die sich radial nach außen erstrecken und die zwischen ihnen umfangsmäßig eine Reihe von axialen Durchlässen begrenzen, die, wenn sich die bewegliche Abdeckkappe (54) in ihrer hinteren Öffnungsposition befindet, eine Verbindung zwischen den beiden Elementen (11, 12) des Anschlußstücks herstellen, wobei die bewegliche Abdeckkappe (54) zu ihrer vorderen Schließposition elastisch durch eine Schraubenfeder (50) zurückgestellt wird, die in etwa an die zylindrische Innenwand (46) des rohrförmigen Körpers (14) angrenzt und die axial zusammengedrückt zwischen dem Verschluß- und Anschlußteil (18) und der beweglichen Abdeckkappe (54) gelagert ist, wobei das vordere Ende der Feder (50) axial nach vorn an einer Auflagefläche zur Anlage kommt, die durch die hinteren Querabschlußflächen (108) der Rippen (104) gebildet wird, und wobei die axialen Durchlässe axial nach hinten im Innern der Schraubenfeder (50) münden,
**dadurch gekennzeichnet,**
**daß** die Rippen (104) axial nach vorn durch vordere Querabschlußflächen (110) begrenzt sind, die mit einer inneren radialen Schulter (102) zusammenwirken, die fest mit dem rohrförmigen Körper (14) verbunden ist, um die vordere Schließposition der beweglichen Abdeckkappe (54) zu bestimmen, und daß ein ortsfester Dichtring (56), der in einer am vorderen Ende des rohrförmigen Körpers (14) angeordneten inneren ringförmigen Auskehlung eingesetzt ist, radial dicht mit einer zylindrischen Fläche (70) zur Auflage der beweglichen Abdeckkappe (54) zusammenwirkt, wenn diese sich in ihrer vorderen Schließposition befindet.

2. Dichtes Anschlußstück nach dem vorangehenden Anspruch, **dadurch gekennzeichnet, daß** sich die Rippen (104) radial von einer mittigen Muffe (66) der beweglichen Abdeckkappe aus erstrecken.

3. Dichtes Anschlußstück nach einem der vorangehenden Ansprüche, **dadurch gekennzeichnet, daß** das hintere Teilstück (104) zur Führung der beweglichen Abdeckkappe (54) mit radialem Spiel im Innern (46) des rohrförmigen Körpers (14) aufgenommen ist, um eine Schwenkbewegung der beweglichen Abdeckkappe im Innern des rohrförmigen Körpers zu ermöglichen, um eine Zentrierung der beweglichen Abdeckkappe (54) im Verhältnis zum anderen Element (11) des Anschlußstücks bei der Verbindung der beiden Elemente des Anschlußstücks zu ermöglichen.

4. Dichtes Anschlußstück nach einem der vorangehenden Ansprüche, **dadurch gekennzeichnet, daß** die Auflagefläche (70) der beweglichen Abdeckkappe axial nach vorn durch eine gewölbte Fläche (74) verlängert wird, um die Zentrierung der beweglichen Abdeckkappe (54) im Verhältnis zum anderen Element (11, 53) des Anschlußstücks bei der Verbindung der beiden Elemente des Anschlußstücks zu vereinfachen.

5. Dichtes Anschlußstück nach dem vorangehenden Anspruch, **dadurch gekennzeichnet, daß** der rohrförmige Körper (14) in einem vorderen inneren radialen Kragen (94) endet, dessen ringförmige Vorderseite (96) mit einem beweglichen Dichtring (55) des ersten Elements (11) des Anschlußstücks (10) bei der Verbindung der beiden Elemente zusammenwirkt.

6. Dichtes Anschlußstück nach dem vorangehenden Anspruch, **dadurch gekennzeichnet, daß** die Auskehlung, die den ortsfesten Dichtring (56) aufnimmt, axial nach vorn durch die ringförmige Rückseite (100) des besagten Kragens (94) und nach hinten durch die ringförmige Vorderseite einer fest mit dem rohrförmigen Körper (14) verbundenen Scheibe (102) begrenzt ist.

7. Dichtes Anschlußstück nach einem der vorangehenden Ansprüche, **dadurch gekennzeichnet, daß** das Verschluß- und Anschlußteil (18) ein vorderes Teilstück (20) mit insgesamt zylindrischer Form umfaßt, das unter Einfügung einer ortsfesten Dichtung (24) im Innern des hinteren Abschlußteils (16) des rohrförmigen Körpers (14) des ersten Elements (12) des Anschlußstücks aufgenommen ist.

8. Dichtes Anschlußstück nach dem vorangehenden Anspruch, **dadurch gekennzeichnet, daß** der rohrförmige Körper (14) eine Metallhülse ist, deren hinterer Abschlußteil (16) am Verschluß- und Anschlußteil (18) durch radiales Aufpressen in Höhe einer in dem besagten vorderen Teilstück (20) nach innen ausgebildeten radialen Auskehlung (22) befestigt ist.

9. Dichtes Anschlußstück nach dem vorangehenden Anspruch, **dadurch gekennzeichnet, daß** die besagte innere radiale Auskehlung (22) einen ortsfesten Runddichtring (24) aufnimmt, der zwischen dem vorderen Teilstück (20) des Verschluß- und Anschlußteils (18) und der zylindrischen Innenfläche (46) des hinteren Abschlußteils (16) der Hülse (14) zum Einsatz kommt.

10. Dichtes Anschlußstück nach einem der vorangehenden Ansprüche, **dadurch gekennzeichnet, daß** die beiden formschlüssigen Elemente des Anschlußstücks als Steck- (12) und Aufnahmeelement (11) ausgeführt sind und daß ausrückbare Mittel zur Verriegelung der beiden Elemente in der verbundenen Position vorgesehen sind, die sie axial im Verhältnis zueinander festhalten.

## Claims

1. A sealed hydraulic coupling (10) for connecting together two portions (31, 32) of a pipe in which a fluid flows, being in particular part of an hydraulic control circuit for a motor vehicle clutch, of the type comprising a pair of complementary coaxial elements (11, 12), one of which (12) comprises a tubular body (14) the rear end of which is closed by a member (18) which is extended axially by a tail (28) for connecting and fastening one of the portions (32) of the pipe, with, extending through the tail, an axial hole (36) open into a chamber (44) which is delimited radially by the tubular body (14) and axially at the front by an obturator (52) which is normally closed so as to seal the coupling element (12) when the two elements (11, 12) are not coupled together, of the type in which the obturator (52) of the said coupling element comprises a movable cap element (54) which is mounted for axial sliding movement in the interior (46) of the tubular body (14), between a forward or obturating position towards which it is biased elastically (50), and in which it co-operates sealingly with the front end portion of the tubular body (14), and a rearward or open position towards which it is displaced by the free front end (53) of the other element (11) of the coupling when the two elements are coupled together, of the type in which the movable cap element (54), which has the general form of a body of revolution, comprises a rear portion (104) for guiding its sliding movement in the tubular body (14), and having a peripheral wall formed with a set of fins (104) extending radially outwards and together delimiting circumferentially a set of axial passages which, when the movable cap element (54) is in its rearward or open position, put the two elements (11, 12) of the coupling into communication with each other, of the type in which the movable cap element (54) is biased elastically towards its forward or obturating position by a coil spring (50) which is substantially adjacent to the internal cylindrical wall (46) of the tubular body (14), and which is mounted in axial compression between the closing and coupling member (18) and the movable cap element (54), the front end of the spring (50) being in axial forward abutment against a thrust surface defined by the rear transverse end faces (108) of the fins (104), and the axial passages being open axially at the rear within the coil spring (50),
**characterised in that** the fins (104) are delimited axially at the front by transverse front end faces (110) which are in co-operation with a radial internal shoulder (102) fixed with respect to the tubular body (14), whereby to determine the front or obturating position of the movable cap element (54), and **in that** a fixed annular sealing ring (56) which is mounted in an internal radial groove formed at the front end of the tubular body (14), is in radial sealing co-operation with a cylindrical engagement surface (70) of the movable cap element (54) when the latter is in its forward or obturating position.

2. A sealed coupling according to the preceding Claim, **characterised in that** the fins (104) extend radially from a central sleeve portion (66) of the movable cap element.

3. A sealed coupling according to either one of the preceding Claims, **characterised in that** the rear guiding portion (104) of the movable cap element (54) is received with a radial clearance in the interior (46) of the tubular body (14), in such a way as to permit pivoting movement of the movable cap element within the tubular body so as to permit the movable cap element (54) to be centred with respect to the other element (11) of the coupling while the two elements of the coupling are being coupled together.

4. A sealed coupling according to any one of the preceding Claims, **characterised in that** the engagement surface (70) of the movable cap element is extended axially forward by an outwardly bowed surface (74), whereby to facilitate centring of the movable cap element (54) with respect to the other element (11, 53) of the coupling while the two elements of the coupling are being coupled together.

5. A sealed coupling according to the preceding Claim, **characterised in that** the tubular body (14) terminates in a radial front internal collar portion (94), the annular front face (96) of which is in co-operation with a movable sealing ring (55) of the first element (11) of the coupling (10) while the two elements are being coupled together.

6. A sealed coupling according to the preceding Claim, **characterised in that** the groove that receives the fixed sealing ring (56) is delimited axially at the front by the annular rear face (100) of the said collar portion (94), and at the rear by the annular front face of a ring (102) which is fixed to the tubular body (14).

7. A sealed coupling according to any one of the preceding Claims, **characterised in that** the closing and coupling member (18) includes a front portion (20) of generally cylindrical form which is received, with a fixed sealing ring (24) interposed, within the rear end portion (16) of the tubular body (14) of the first element (12) of the coupling.

8. A sealed coupling according to the preceding Claim, **characterised in that** the tubular body (14) is a tubular metallic member having a rear end portion (16) which is fixed to the closing and coupling member (18) by radial deformation into a radial internal groove (22) formed in the said front portion (20).

9. A sealed coupling according to the preceding Claim, **characterised in that** the said internal radial groove (22) receives a fixed O-ring seal (24) which is interposed between the front portion (20) of the closing and coupling member (18) and the cylindrical inner surface (46) of the rear end portion (16) of the tubular member (14).

10. A sealed coupling according to any one of the preceding Claims, **characterised in that** the two complementary elements of the coupling are of the male type (12) and the female type (11), and **in that** disengageable locking means are provided for locking the two elements together in their coupled relationship in which they are retained axially with respect to each other.
